# EUROPÄISCHE PATENTSCHRIFT

(11) **EP 1 165 989 B1**
(45) Veröffentlichungstag und Bekanntmachung des Hinweises auf die Patenterteilung: **17.07.2002**
(21) Anmeldenummer: 00922594.7
(22) Anmeldetag: 01.04.2000
(51) Int. Cl.: F16H 61/06

(54) **KUPPLUNGSSYSTEM IN EINEM GETRIEBE**
CLUTCH SYSTEM INSTALLED IN A TRANSMISSION
SYSTEME D'EMBRAYAGE D'UNE TRANSMISSION

(30) Priorität: 07.04.1999 DE 19915557
(43) Veröffentlichungstag der Anmeldung: 02.01.2002
(73) Patentinhaber: ZF FRIEDRICHSHAFEN Aktiengesellschaft, 88038 Friedrichshafen (DE)
(72) Erfinder: BECK, Karl, D-88097 Eriskirch (DE)
(86) Internationale Anmeldenummer: EP0002932
(87) Internationale Veröffentlichungsnummer: WO0060257

(56) Entgegenhaltungen:
- EP-A- 0 537 810
- DE-A- 4 405 299
- DE-A- 19 517 888
- PATENT ABSTRACTS OF JAPAN vol. 1995, no. 08, 29. September 1995 (1995-09-29) & JP 07 127785 A (MAZDA MOTOR CORP), 16. Mai 1995 (1995-05-16)

## Beschreibung

Die Erfindung betrifft ein Getriebe, bei welchem Kupplungen oder Bremsen durch Federkraft geschlossen und hydraulisch wieder geöffnet werden, um den Antrieb des Getriebes mit dem Abtrieb des Getriebes zu verbinden oder zu trennen oder verschiedene Übersetzungsstufen zu schalten.

Bei dem Getriebe der vorstehend geschilderten Gattung handelt es sich häufig um Wendegetriebe, wie sie z. B. in Flurförderfahrzeugen, wie Stapler, eingesetzt werden. Hierbei wird vorzugsweise eine Kupplung für eine Vorwärtsfahrt und eine Kupplung für eine Rückwärtfahrt benutzt. Darüber hinaus kann es sich aber auch um die Eingangsbaugruppe eines mehrgängigen Wendegetriebes handeln, die insbesondere in Baumaschinen, wie z. B. Radladern, Baggerladern usw., Verwendung findet.

Gattungsgemäße Getriebe, welche Kupplungen oder Bremsen verwenden, die über eine Federkraft geschlossen und über eine hydraulische Kraft wieder geöffnet werden, haben den Vorteil, daß durch Modulation des Betätigungsdruckes die Kupplungen oder Bremsen derart geschaltet werden können, daß eine gesteuerte Lastübernahme erfolgt. Dies ist vor allem bei dem Reversierbetrieb eines Flurförderfahrzeugs oder einer Notabbremsung über eine Lamellenkupplung oder Lamellenbremse bis zum Stillstand notwendig, da sonst eine unzulässig hohe oder eine zu geringe Abbremsung erfolgen würde.

Die gattungsbildende DE 195 17 888 A1 offenbart ein unter Last schaltbares Wendegetriebe, bei welchem die Wendekupplungen über Federkraft geschlossen und hydraulisch wieder geöffnet werden und eine hydraulisch geöffnete Kupplung über ein Ventil auf einen Schließvorgang geschaltet werden kann, wobei die Leitung zur Betätigungseinrichtung der Kupplung mit einem Speicher und einer Blende verbunden wird. Der Speicher ist in seinem Volumen in etwa so groß ausgelegt, daß er das Volumen der Betätigungseinrichtung aufnehmen kann, so daß die Lamellen schnell nach Auslösen der Schaltung zur Anlage kommen. Somit ist es möglich, eine zuvor geöffnete Kupplung sehr schnell auf eine Position zu bringen, bei welcher die Lamellen zur Anlage kommen, da das Volumen in der Betätigungseinrichtung in den Speicher eingespeist wird. Durch elastische Verformungen der Bauteile kommen die Lamellen jedoch erst zur Anlage, wenn diese Restdruckflüssigkeit bei gefülltem Speicher aus der Betätigungseinrichtung der Kupplung über eine Drosselstelle in das Druckmittelreservoir abgeführt ist. Nachdem die Lamellen zur Anlage gekommen sind und der Speicher mit diesem Ölvolumen gefüllt ist, erfolgt die druckmodulierte Lastübernahme der Kupplung, indem das Öl des Speichers über eine Blende in ein Druckmittelreservoir abfließt und somit ein Druck, welcher durch den Speicher bestimmt wird und ebenfalls an der Betätigungseinrichtung der Kupplung ansteht, noch über eine bestimmte Zeitspanne aufrechterhalten wird.
Wird nun eine zuvor hydraulisch geöffnete Kupplung über ein Ventil auf eine Schließposition geschaltet, so wird der Speicher, welcher mit der Kupplung verbunden ist, mit Öl befüllt und entleert sich langsam über die Blende zum Druckmittelreservoir. Erfolgt eine erneute Schaltung, bei welcher die Betätigungseinrichtung der Kupplung wieder mit Druck beaufschlagt wird und hat der Speicher sein Ölvolumen noch nicht vollständig über die Blende in das Druckmittelreservoir abgeführt, so ist der Speicher teilweise befüllt. Erfolgt anschließend eine weitere Schaltung, bei welcher die Kupplung wieder im Schließsinne betätigt wird und somit die Betätigungseinrichtung der Kupplung wieder mit dem Speicher verbunden wird, so ist es nicht möglich, daß der Speicher das vollständige Ölvolumen der Betätigungseinrichtung der Kupplung aufnehmen kann, da in dem Speicher noch Druckflüssigkeit der vorhergehenden Schaltung vorhanden ist und die Lamellen der Kupplung kommen dadurch nicht sofort zur Anlage. Da nun der Speicher und teilweise die Betätigungseinrichtung der Kupplung noch mit Öl gefüllt ist, entsteht eine Zeitverzögerung, bis die Lamellen der Kupplung zur Anlage kommen, da die Druckflüssigkeit in der Betätigungseinrichtung der Kupplung nun über die Blende abfließen muß. Die Lastübernahme der Kupplung erfolgt zeitverzögert, so daß z. B. bei einer gewollten Rückschaltung das Fahrzeug noch eine unzulässige Strecke bis zur Lastübernahme zurücklegt. Erfolgt die Funktion der Haltebremse oder dynamischen Notbremse über zwei Kupplungen, welche sich gegenseitig verspannen, so kann bei solchen zuvor aufgezeigten, dicht hintereinanderfolgenden Schaltungen ein Zustand erzeugt werden, bei welchem der Fahrer die Parkbremse eingelegt hat, die Lastübernahme der Kupplung jedoch erst später erfolgt, was zu einer unzulässigen und gefährlichen Situation führen könnte.

Bei der JP 7-127785 A wird vorgeschlagen, dass bei einem gegebenen Kolbenhub, die Druckkammer über eine Kurzschlussleitung mit dem Ölreservoir verbunden wird; somit wird der Bauraum eines Akkumulators reduziert.

Der vorliegenden Erfindung liegt die Aufgabe zugrunde, ein Getriebe mit einem Schaltkupplungssystem zu schaffen, bei welchem mindestens eine Kupplung durch Federkraft geschlossen und hydraulisch wieder geöffnet werden kann, die Lastübernahme der Kupplung druckmoduliert abläuft und die Zeit bis zur Lastübernahme der Kupplung unabhängig von dem zeitlichen Abstand der Schaltungen ist.

Die Aufgabe wird mit einem, auch die kennzeichnenden Merkmale des Hauptanspruchs aufweisenden, gattungsgemäßen Getriebe gelöst.

Erfindungsgemäß wird die Kupplung oder Bremse geöffnet, indem die Betätigungseinrichtung der Kupplung oder Bremse mit Druck beaufschlagt wird, indem mit Hilfe eines Ventils die Betätigungseinrichtung der Kupplung oder Bremse mit einer Druckmittelquelle verbunden wird. Soll die Kupplung oder Bremse geschlossen werden, so wird die Betätigungseinrichtung der Kupplung oder Bremse mit Hilfe eines Ventils mit einem Speicher und einer Blende verbunden, so daß eine Feder, welche auf die Betätigungseinrichtung der Kupplung oder Bremse wirkt, das Ölvolumen in der Betätigungseinrichtung in den Speicher schiebt und somit die Lamellen der Kupplung oder Bremse zur Anlage bringt. Das Volumen des Speichers ist dergestalt ausgelegt, daß es vorzugsweise dem Volumen der Betätigungseinrichtung der Kupplung oder Bremse entspricht. Ist in der Betätigungseinrichtung bzw. in dem Speicher ein bestimmtes Druckniveau erreicht, so öffnet ein Ventil, welches mit der Betätigungseinrichtung oder dem Speicher in Verbindung steht, so daß das Druckmittel aus der Betätigungseinrichtung direkt in ein Druckmittelreservoir abfließen kann. Das Ventil schließt wieder automatisch, wenn ein bestimmtes Druckniveau in der Betätigungseinrichtung bzw. dem Speicher erreicht ist. Somit ist gewährleistet, daß unabhängig, ob der Speicher schon mit Druckmittel befüllt ist oder nicht, immer die gleiche Ausgangssituation zur druckmodulierten Lastübernahme in der Kupplung vorliegt, da oberhalb eines bestimmten Druckniveaus das Druckmittel direkt in das Druckmittelreservoir abfließen kann, bis bei einem zuvor definierten Druckniveau der Speicher vollständig mit Druckmittel befüllt ist und die Lamellen der Kupplung zur Anlage kommen. Somit kann das Volumen des Speichers auch unabhängig vom Volumen der Betätigungseinrichtung der Kupplung oder Bremse ausgeführt sein, da der Speicher nicht mehr vollständig das Volumen der Betätigungseinrichtung aufnehmen muß, da die druckmodulierte Lastübernahme der Kupplung nur vom Druck-Zeit-Verlauf abhängig ist, welcher durch die Auslegung des Speichers und der Blende, mit welcher der Speicher verbunden ist, und durch welche das Druckmittel des Speichers in das Druckmittelreservoir abfließt, abhängt. Vorzugsweise ist der Speicher dergestalt ausgeführt, daß über den Kolben des Speichers immer dann eine Verbindung zum Druckmittelreservoir entsteht, wenn der Speicher vollständig mit Druckmittel befüllt ist. Die Verbindung des Speichers oder der Betätigungseinrichtung der Kupplung mit dem Druckmittelreservoir oberhalb eines bestimmten Druckniveaus kann jedoch auch über ein separates Ventil erfolgen, wodurch jedoch zusätzliche Bauteile benötigt werden. Zur druckmodulierten Lastübernahme entleert sich das Volumen des Speichers über eine Blende in das Druckmittelreservoir. Diese Blende kann als eigenständiges Bauteil ausgeführt sein, vorteilhaft ist es jedoch auch, den Ringspalt, welcher zwischen dem Kolben des Speichers und dessen Zylinderwand entsteht, so auszulegen, daß eine definierte Drosselstelle als Abfluß des Druckmittels aus dem Speicher zum Druckmittelreservoir verwendet werden kann. Indem der Speicher nicht mehr das gesamte Volumen der Betätigungseinrichtung aufnehmen muß, sondern oberhalb eines bestimmten Druckniveaus ein überschüssiges Volumen direkt in das Druckmittelreservoir ableitet, kann dieses zuvor definierte Druckniveau so ausgelegt werden, daß direkt nach der Schaltung in Richtung Schließen der Kupplung das Lamellenpaket anliegt und ein definiertes Drehmoment überträgt. Somit entfällt jegliche Zeitverzögerung bis zur Lastübernahme, da auch das Druckmittelvolumen, welches infolge elastischer Verformung der Betätigungseinrichtung und der Kupplung noch bis zur Lastübernahme der Lamellen abzuführen ist, ebenfalls bis zu einem zuvor definierten Druckniveau direkt in den Druckmittelbehälter abgeführt wird. Die unzulässige Zeitverzögerung bei der Lastübernahme einer Haltebremse oder Notbremse oder einer Wendekupplung entfällt somit vollständig.

Weitere Ausgestaltungsmöglichkeiten sind der Figurenbeschreibung zu entnehmen.
Es zeigen:

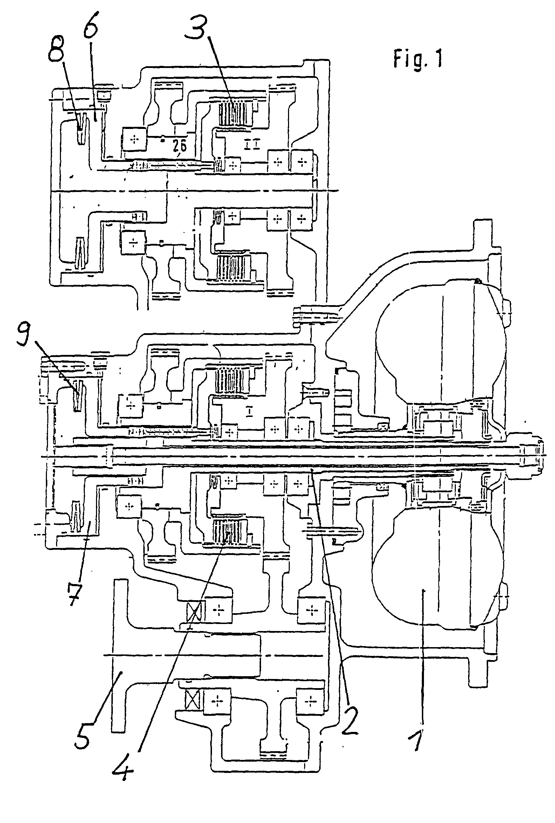

- Fig. 1: ein unter Last schaltbares Wendegetriebe, bei welchem die Kupplungen für eine Vorwärtsfahrt und eine Rückwärtsfahrt hydraulisch geöffnet und über Federkraft geschlossen werden können. Die Funktion der Haltebremse wird dadurch erreicht, daß beide Kupplungen geschlossen werden, indem beide Betätigungseinrichtungen drucklos geschaltet werden, wodurch der Abtrieb blockiert wird;

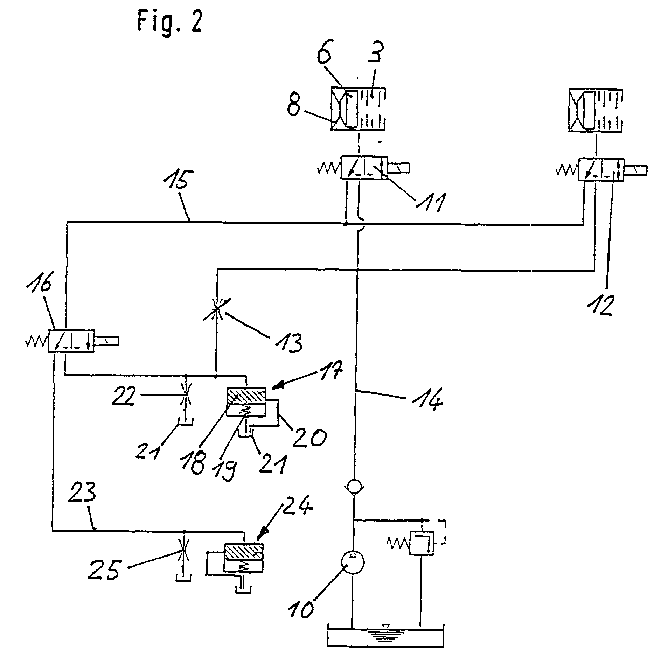

- Fig. 2: ein Hydraulikschema eines Getriebes mit zwei schaltbaren Kupplungen;
- Fig. 3: einen Speicher, welcher drucklos ist und
- Fig. 4: einen Speicher, welcher druckbeaufschlagt ist.

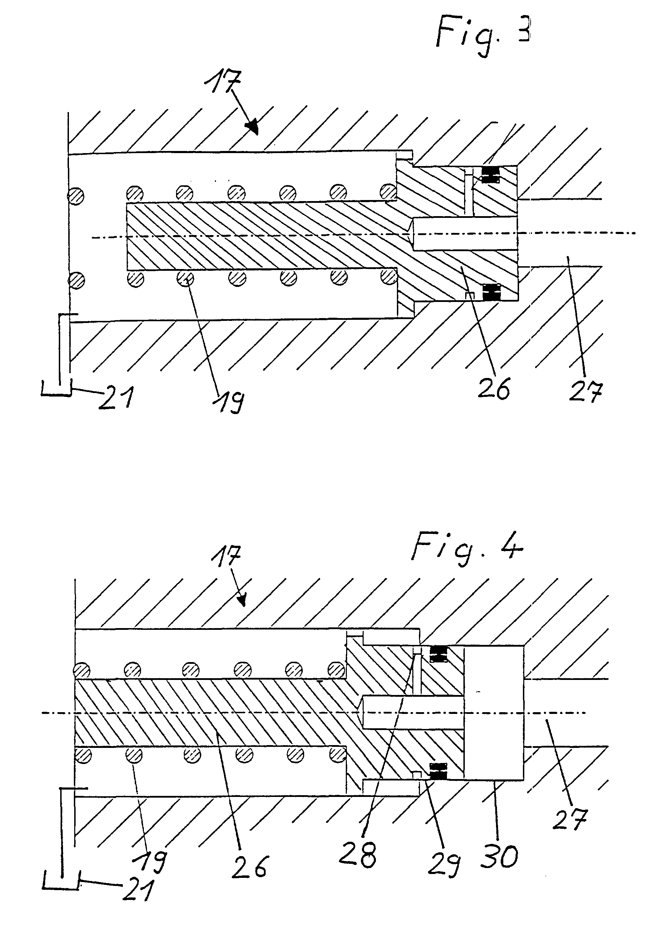

Fig. 1:
   Ein nicht dargestellter Antriebsmotor treibt über einen Wandler 1 eine Antriebswelle 2 eines Getriebes an. Über die Kupplungen 3 und 4 kann eine Vorwärts- bzw. Rückwärtsfahrtrichtung geschaltet werden, so daß sich die Abtriebswelle 5 in Drehrichtung Vorwärts oder Rückwärts dreht. Über die Betätigungseinrichtungen 6 und 7 werden die Kupplungen 3 und 4 geschaltet. Ist die Betätigungseinrichtung 6 drucklos, so schließt eine Feder 8 die Kupplung 3. Ist die Betätigungseinrichtung 6 mit Druck beaufschlagt, so öffnet die Kupplung 3. Ist die Betätigungseinrichtung 7 drucklos, so schließt die Feder 9 die Kupplung 4. Ist die Betätigungseinrichtung 7 mit Druck beaufschlagt, so wird die Kupplung 4 geöffnet. Die Betätigungseinrichtungen 6 und 7 sind mit einem Speicher, wie in den Fig. 3 und 4 beschrieben, verbunden.
Fig. 2:
   Eine Pumpe 10 fördert Druckmittel zu den Ventilen 11 und 12 sowie dem Inch-Ventil 13, welches bei nicht benötigter Inch-Funktion geschlossen ist. Wird mit Hilfe des Ventils 11 die Betätigungseinrichtung 6 der Kupplung 3 mit Druck beaufschlagt, so öffnet die Kupplung 3 entgegen der Federkraft der Feder 8. Wird die Betätigungseinrichtung 6 der Kupplung 3 mit Hilfe des Ventils 11 von der Zulaufleitung 14 abgetrennt und mit der Rücklaufleitung 15 verbunden, so wird das Druckmittel der Betätigungseinrichtung 6 über das Ventil 16, welches im Normalbetrieb den Speicher 17 mit der Rücklaufleitung 15 verbindet, in den Speicher 17 gedrückt, indem die Feder 8 eine Kraft auf die Betätigungseinrichtung 6 ausübt. Der Kolben 18 des Speichers 17 bewegt sich entgegen der Federkraft der Feder 19, bis er ein zuvor definiertes Druckniveau erreicht. Bei Erreichen dieses Druckniveaus verbindet der Kolben 18 die Rücklaufleitung 15 mit der Leitung 20, über welche so viel Druckmittel in das Druckmittelreservoir 21 abfließen kann, bis ein zuvor definierter Druck unterschritten wird. Wird dieser Druck unterschritten, so verschließt der Kolben 18 die Verbindung der Rücklaufleitung 15 zur Leitung 20 und das Druckmittel im Speicher 17 muß über eine Blende 22 in das Druckmittelreservoir 21 abfließen. Der zuvcr definierte Druck, bei welchem der Kolben 18 die Rücklaufleitung 15 mit der Leitung 20 verbindet, ist so ausgelegt, daß die Lamellen der Kupplung 3 anliegen und ein definiertes Drehmoment übertragen. Die Blende 22 und das Volumen in dem Speicher 17 und die Federkraft der Feder 19 sind so ausgelegt, daß eine gewünschte druckmodulierte Lastübernahme in der Kupplung 3 erfolgt. Auch wenn die Betätigungseinrichtung 6 der Kupplung 3 mehrmals mit der Zulaufleitung 14 und anschließend der Rücklaufleitung 15 verbunden wird, so daß ein Zustand auftritt, bei welchem der Speicher 17 mit Druckmittel befüllt ist und die Betätigungseinrichtung 6 ebenfalls mit Druckmittel befüllt ist, kann das gesamte Volumen der Betätigungseinrichtung 6 bis zu einem zuvor definierten Druckniveau über die Leitungen 15 und 20 in das Druckmittelreservoir 21 abfließen, so daß die Lamellen der Kupplung 3 immer bei einem gleichen, zuvor definierten zeitlichen Zustand und Druckniveau zur Anlage kommen. Um verschiedene Schaltungen realisieren zu können, wird über ein Ventil 16 die Rücklaufleitung 15 mit der Leitung 23 verbunden, wodurch über die Auslegung eines Speichers 24 und einer Blende 25 ein weiterer Verlauf eines Druckes über der Zeit realisiert werden kann.
Fig. 3:
   Ist der Kolben 26 eines Speichers 17 drucklos, so befindet sich der Kolben 26 infolge der Federkraft der Feder 19 in seiner Ausgangsstellung. Der Federraum der Feder 19 ist mit einem Druckmittelreservoir 21 verbunden. Eine Leitung 27 steht mit einer Rücklaufleitung 15 in Verbindung.
Fig. 4:
   Wird der Kolben 26 des Speichers 17 über die Leitung 27 mit Druck beaufschlagt, indem der Speicher 17 mit einer Betätigungseinrichtung einer Kupplung verbunden wird, so bewegt sich der Kolben 26 in axialer Richtung gegen die Federkraft der Feder 19, bis das Druckmittel, welches aus der Leitung 27 zum Kolben 26 fließt, über eine Bohrung 28 zum Druckmittelbehälter 21 abfließen kann. Der Kolben 26 verbleibt in dieser Stellung so lange, bis so viel Druckmittel aus einer Betätigungseinrichtung einer Kupplung oder Bremse zum Druckmittelreservoir 21 abgeflossen ist, daß der Druck in der Leitung 27 unter einen bestimmten Wert fällt und die Feder 19 den Kolben 26 so weit verschiebt, daß die Öffnung 28 wieder verschlossen wird. Zwischen dem Kolben 26 und der Bohrung 30 des Speichers 17 befindet sich ein definierter Spalt 29, über welchen nun das Volumen, welches sich noch im vorgespannten Speicher 17 befindet abfließen kann. Dadurch baut sich der Druck in der Leitung 27 und in der Betätigungseinrichtung einer Kupplung langsam ab, so daß eine druckmodulierte Lastübernahme der Kupplung erfolgen kann. Indem die Funktion der Blende sowie die Funktion eines Ventils, welches Druckflüssigkeit bis zu einem bestimmten Druckniveau direkt in das Druckmittelreservoir abführt, in dem Speicher 17 integriert ist und der Speicher 17 sich im Getriebegehäuse befindet, ist es möglich, ein kompaktes Getriebe mit wenigen Bauteilen zu schaffen.

### Bezugszeichen

- 1: Drehmomentwandler
- 2: Antriebswelle
- 3: Kupplung
- 4: Kupplung
- 5: Abtriebswelle
- 6: Betätigungseinrichtung
- 7: Betätigungseinrichtung
- 8: Feder
- 9: Feder
- 10: Pumpe
- 11: Ventil
- 12: Ventil
- 13: Inch-Ventil
- 14: Zulaufleitung
- 15: Rücklaufleitung
- 16: Ventil
- 17: Speicher
- 18: Kolben
- 19: Feder
- 20: Leitung
- 21: Druckmittelreservoir
- 22: Blende
- 23: Leitung
- 24: Speicher
- 25: Blende
- 26: Kolben
- 27: Leitung
- 28: Öffnung
- 29: Spalt
- 30: Bohrung

## Patentansprüche

1. Getriebe mit mindestens einer Schaltkupplung (3, 4), welche gegen eine Federkraft hydraulisch im Öffnungssinne betätigbar ist, indem eine Betätigungseinrichtung (6, 7) mit einer Zulaufleitung (14) verbindbar ist und welche durch eine Federkraft im Schließsinne betätigbar ist, indem eine Betätigungseinrichtung (6, 7) mit einer Rücklaufleitung (15) verbindbar ist, welche mit einem Speicher (17, 24) und über eine Drosselstelle (22, 25) mit einem Druckmittelreservoir (21) in Verbindung steht, so daß das in den Speicher (17, 24) überführte und das in der Betätigungseinrichtung (6, 7) vorhandene Druckmittel über eine Drosselstelle (22, 25) abfließt, **dadurch gekennzeichnet, daß** bei einer Verbindung der Betätigungseinrichtung (6, 7) mit der Rücklaufleitung (15) die Rücklaufleitung (15) zusätzlich so lange mit dem Druckmittelreservoir (21) in direkter Verbindung steht, bis ein zuvor definiertes Druckniveau in der Betätigungseinrichtung (6, 7) erreicht ist und bei Erreichen des zuvor definierten Druckniveaus das Druckmittel in der Rücklaufleitung (15) und dem Speicher (17, 24) ausschließlich über die Drosselstelle (22, 25) in das Ölreservoir (21) abfließt.

2. Getriebe nach Anspruch 1, **dadurch gekennzeichnet, daß** der Speicher (17, 24) ein Federspeicher mit einem Kolben (26) ist, bei welchem eine Stirnfläche des Kolbens (26) mit einer Rücklaufleitung (15) der Betätigungseinrichtung und eine entgegengesetzte Stirnfläche des Kolbens mit einem Druckmittelreservoir (21) verbunden ist.

3. Getriebe nach Anspruch 2, **dadurch gekennzeichnet, daß** ein Kolben (26) eines Federspeichers (17, 24) oberhalb eines zuvor definierten Druckniveaus eine Rücklaufleitung (15) der Betätigungseinrichtung (6, 7) mit einem Druckmittelreservoir (21) verbindet.

4. Getriebe nach Anspruch 2, **dadurch gekennzeichnet, daß** ein Kolben (26) eines Federspeichers (17, 24) einen Ringspalt (29) aufweist, welcher eine Drosselstelle (22, 25) darstellt, über welche unterhalb eines zuvor definierten Druckniveaus eine Rücklaufleitung (15) der Betätigungseinrichtung (6, 7) mit einem Druckmittelreservoir (21) verbunden ist.

5. Getriebe nach Anspruch 1, **dadurch gekennzeichnet, daß** das Getriebe ein Wendegetriebe ist, bei welchem mindestens eine Schaltkupplung (3, 4) für eine Vorwärtsfahrt und mindestens eine Schaltkupplung (3, 4) für eine Rückwärtsfahrt betätigbar ist.

6. Getriebe nach Anspruch 5, **dadurch gekennzeichnet, daß** durch Drucklosschalten einer Betätigungseinrichtung (6, 7) einer Schaltkupplung (3, 4) für eine Vorwärtsfahrt und einer Schaltkupplung (3, 4) für eine Rückwärtsfahrt die Schaltkupplungen (3, 4) geschlossen werden und dergestalt miteinander verbunden sind, daß eine Abtriebswelle (5) drehfest gehalten wird.

7. Getriebe nach Anspruch 1, **dadurch gekennzeichnet, daß** der Speicher (17, 24) ein Druckmittelvolumen aufweist, welches etwa demjenigen Ölvolumen entspricht, welches aus der Betätigungseinrichtung (6, 7) verdrängt wird, bis die Lamellen einer Schaltkupplung (3, 4) zur Anlage kommen.

8. Getriebe nach Anspruch 1, **gekennzeichnet durch** die Verwendung bei einem Flurförderfahrzeug, insbesondere Gabelstapler.

## Claims

1. Transmission having at least one clutch (3, 4), which is actuable hydraulically in opening direction against a spring force in that an actuating device (6, 7) is connectable to an inlet line (14) and which is actuable in closing direction by means of a spring force in that an actuating device (6, 7) is connectable to a return line (15), which is connected to an accumulator (17, 24) and by a restrictor (22, 25) to a pressure medium reservoir (21), so that the pressure medium, which has been transferred to the accumulator (17, 24) and which is provided in the actuating device (6, 7), flows off via a restrictor (22, 25), **characterized in that**, given a connection of the actuating device (6, 7) to the return line (15), the return line (15) is additionally connected directly to the pressure medium reservoir (21) until a previously defined pressure level has been reached in the actuating device (6, 7) and upon attainment of the previously defined pressure level the pressure medium in the return line (15) and in the accumulator (17, 24) flows off exclusively via the restrictor (22, 25) into the oil reservoir (21).

2. Transmission according to claim 1, **characterized in that** the accumulator (17, 24) is a spring accumulator with a piston (26), in which one end face of the piston (26) is connected to a return line (15) of the actuating device and an opposite end face of the piston is connected to a pressure medium reservoir (21).

3. Transmission according to claim 2, **characterized in that** a piston (26) of a spring accumulator (17, 24) above a previously defined pressure level connects a return line (15) of the actuating device (6, 7) to a pressure medium reservoir (21).

4. Transmission according to claim 2, **characterized in that** a piston (26) of a spring accumulator (17, 24) has an annular gap (29), which is a restrictor (22, 25), by means of which below a previously defined pressure level a return line (15) of the actuating device (6, 7) is connected to a pressure medium reservoir (21).

5. Transmission according to claim 1, **characterized in that** the transmission is a reversing transmission, in which at least one clutch (3, 4) for forward motion and at least one clutch (3, 4) for reverse motion is actuable.

6. Transmission according to claim 5, **characterized in that** by depressurizing an actuating device (6, 7) of a clutch (3, 4) for forward motion and a clutch (3, 4) for reverse motion the clutches (3, 4) are closed and connected to one another in such a way that an output shaft (5) is held in a rotationally fixed manner.

7. Transmission according to claim 1, **characterized in that** the accumulator (17, 24) has a pressure medium volume corresponding approximately to the oil volume, which is displaced from the actuating device (6, 7) up to the coming into abutment of the discs of a clutch (3, 4).

8. Transmission according to claim 1, **characterized by** the use in an industrial lift truck, in particular a fork lift truck.

## Revendications

1. Transmission comprenant au moins un embrayage de commutation (3, 4) qui peut être actionné hydrauliquement dans le sens de l'ouverture à l'encontre d'une force élastique, un dispositif d'actionnement (6, 7) pouvant être relié à une conduite d'arrivée (14) et actionné dans le sens de la fermeture par une force élastique, un dispositif d'actionnement (6, 7) peut être relié à une conduite de retour (15) qui est en communication avec un accumulateur (17, 24) et avec un réservoir de fluide de pression (21) à travers un étranglement (22, 25), de sorte que le fluide de pression envoyé dans l'accumulateur (17, 24) et celui présent dans le dispositif d'actionnement (6, 7) s'écoulent à travers un étranglement (22, 25), **caractérisée en ce que**, lorsque le dispositif d'actionnement (6, 7) est relié à la conduite de retour (15), la conduite de retour (15) est en outre en communication directe avec le réservoir de fluide de pression (21) jusqu'à ce qu'un niveau de pression préalablement défini soit atteint dans le dispositif d'actionnement (6, 7) et **en ce que**, lorsque le niveau de pression préalablement défini est atteint, le fluide de pression contenu dans la conduite de retour (15) et dans l'accumulateur (17, 24) s'écoule dans le réservoir d'huile (21) exclusivement par l'étranglement (22, 25).

2. Transmission selon la revendication 1, **caractérisée en ce que** l'accumulateur (17, 24) est un accumulateur à ressort comprenant un piston (26), dans lequel une surface frontale du piston (26) est reliée à une conduite de retour (15) du dispositif d'actionnement et une surface frontale opposée du piston est reliée à un réservoir de fluide de pression (21).

3. Transmission selon la revendication 2, **caractérisée en ce qu'**au-dessus d'un niveau de pression préalablement défini, un piston (26) d'un accumulateur à ressort (17, 24) relie une conduite de retour (15) du dispositif d'actionnement (6, 7) à un réservoir de fluide de pression (21).

4. Transmission selon la revendication 2, **caractérisée en ce que** un piston (26) d'un accumulateur à ressort (17, 24) comporte une fente annulaire (29) qui représente un étranglement (22, 25) à travers lequel, au-dessous d'un niveau de pression préalablement défini, une conduite de retour (15) du dispositif d'actionnement (6, 7) est reliée à un réservoir de fluide de pression (21).

5. Transmission selon la revendication 1, **caractérisée en ce que** la transmission est une transmission réversible, dans laquelle au moins un embrayage de commutation (3, 4) peut être actionné pour une marche avant et au moins un embrayage de commutation (3, 4) peut être actionné pour une marche arrière.

6. Transmission selon la revendication 5, **caractérisée en ce que**, sous l'effet de la mise hors pression d'un dispositif d'actionnement (6, 7) d'un embrayage de commutation (3, 4) pour une marche avant et d'un embrayage de commutation (3, 4) pour une marche arrière, les embrayages de commutation (3, 4) sont fermés et reliés l'un à l'autre de manière qu'un arbre de sortie (5) soit maintenu bloqué en rotation.

7. Transmission selon la revendication 1, **caractérisée en ce que** l'accumulateur (17, 24) comporte un volume de fluide de pression qui correspond à peu près au volume d'huile qui est expulsé du dispositif d'actionnement (6, 7) jusqu'à ce que les disques d'un embrayage de commutation (3, 4) viennent en appui mutuel.

8. Transmission selon la revendication 1, **caractérisée par** l'utilisation dans un véhicule de manutention, en particulier un chariot élévateur à fourche.
